# EUROPEAN PATENT APPLICATION

(11) **EP 2 151 975 A1**
(43) Date of publication of application: **10.02.2010**
(21) Application number: 09006099.7
(22) Date of filing: 05.05.2009
(51) Int. Cl.: H04M 1/02

(54) **Slide hinge module for mobile phone**

(30) Priority: 07.08.2008 KR 20080077319; 14.10.2008 KR 20080100581
(71) Applicant: Hanbit Precision Co., Ltd., Uiwang-si, Gyeonggi-do (KR)
(72) Inventor: Lee, Geun Ju, Anyang-si Gyeonggi-do (KR)
(74) Representative: Sawodny, Michael-Wolfgang

(57) **Abstract**

The slide hinge module for a mobile phone is provided, which comprises a fixing plate which is fixed in the body; a moving plate which is fixed in the cover; a guide rail which is provided in one side of the moving plate in a horizontal direction; a slide member which is engaged while corresponding to the guide rail and reciprocates along the guide rail and is fixed in one side of the fixing plate; and an elastic assembly which is installed in one side of the guide rail and slides the moving plate with respect to the fixing plate, whereby a concave part is formed in one side of the guide rail, and said elastic assembly is installed in the concave part.

## Description

### TECHNICAL FIELD

The present invention relates to a slide hinge module for a mobile phone, and in particular to a slide hinge module for a mobile phone which makes it possible to horizontally reciprocate a mobile phone cover, which is equipped with a display part, with respect to a mobile phone body.

### BACKGROUND ART

As a wireless communication technology advances, a mobile phone has been equipped with multiple functions. The mobile phone might be generally classified into a flip type, a folder type and a slide type.

In recent years, a mobile phone is equipped with various functions such as an audio communication function, an e-mail service function, an internet connection function, a photographing function, a game or something. A mobile phone with a keypad of a QWERTY keypad arrangement like a keyboard of a computer has been developed in order to effectively use the above diverse and composite functions.

Here the QWERTY keypad is designed with its horizontal length being longer than a vertical length. The QWERTY keypad is opened and closed as a cover horizontally slides in a left and right direction whereas a numeral pad of a body in a conventional mobile phone is opened and closed as a cover slides upward and downward.

At this time, an external force is applied to one side of a cover in order to slide a cover. Since the width of a cover is wider as compared to its length by assuming that a left and right sliding direction of a cover is a longitudinal direction, a cover might be hurt when it rotates about a hinge and is distorted.

When a torsion spring is used as a spring hinge like in a conventional art, an assembling and disassembling work might be complicated along with problems, which might cause foreign substances to be inserted into a coil part of a torsion spring when a mobile phone is used for a long time, by means of which a sliding operation feels bad, and in worse case a sliding work might be dead. When a spring casing with a compression spring is used, one-piece casing or two-piece upper and lower casings are used so as to prevent an escape of a compression spring. In which case, a terminal might not be compact sized due to an increase of a thickness of a spring casing. As the number of parts used increases, an assembling work might be prolonged.

### DISCLOSURE OF THE INVENTION

Accordingly, it is an object of the present invention to provide a slide hinge module for a mobile phone which overcomes the problems encountered in a conventional art by providing a slide hinge module for a mobile phone in a slide hinge module for a mobile phone which reciprocates a cover with a display part in a horizontal direction with respect to a body, which slide hinge module comprises a fixing plate which is fixed in the body; a moving plate which is fixed in the cover; a guide rail which is provided in one side of the moving plate in a horizontal direction; a slide member which is engaged while corresponding to the guide rail and reciprocates along the guide rail and is fixed in one side of the fixing plate; and an elastic assembly which is installed in one side of the guide rail and slides the moving plate with respect to the fixing plate, whereby a concave part is formed in one side of the guide rail, and the elastic assembly is installed in the concave part.

To achieve the above objects, in a slide hinge module for a mobile phone which reciprocates a cover with a display part in a horizontal direction with respect to a body, there is provided a slide hinge module for a mobile phone which comprises a fixing plate which is fixed in the body; a moving plate which is fixed in the cover; a guide rail which is provided in one side of the moving plate in a horizontal direction; a slide member which is engaged while corresponding to the guide rail and reciprocates along the guide rail and is fixed in one side of the fixing plate; and an elastic assembly which is installed in one side of the guide rail and slides the moving plate with respect to the fixing plate, whereby a concave part is formed in one side of the guide rail, and the elastic assembly is installed in the concave part.

The slide member is engaged at both upper and lower sides of the fixing plate, respectively, while operating as one pair, and the guide rail is engaged at both upper and lower sides of the moving plate, respectively, while operating as one pair.

The elastic assembly is installed between a pair of the guide rails.

A slide member accommodation groove is formed in one side of the fixing plate for accommodating the slide member.

A stopper is protruded from both left and right sides of the slide member, and a stopper accommodation groove is formed in one side of the fixing plate for accommodating the stopper.

The stopper is equipped with an insertion groove formed in its one side, and an insertion part is cut and formed in both left and right sides of the slide member and is correspondingly engaged to the insertion groove, and the stopper is inserted into and engaged to the insertion part.

The elastic assembly includes a torsion spring formed of a coil part and a pair of leg parts extended from both ends of the coil part, a cover part which covers both upper and lower parts of the coil part, and a pair of hooks which are fixed in the ends of the leg parts, respectively, and one of a pair of the hooks is engaged to one side of the fixing plate, and the other one of the same is engaged to one side of the moving plate.

A hook engaging hole is formed in the fixing plate and the moving plate, respectively, so a pair of hooks are correspondingly engaged to the same, and the hook engaging hole is formed of a fixing hole in which the hook is inserted and engaged, and an insertion hole formed in one side of the fixing hole for guiding the hook into the fixing hole.

The both sides of the slide member are inwardly bent in channel shapes for thereby forming an engaging part, and the both sides of the guide rail are outwardly bent in angle shapes for thereby forming a rail part, and the engaging part is correspondingly engaged to the rail part.

### EFFECTS

In the slide hinge module for a mobile phone according to the present invention, a distortion of a cover can be prevented when a cover reciprocates in a horizontal direction with respect to a mobile phone body, which leads to preventing a damage of a cover while enhancing its reliability.

By means of a simple structure and constriction, a defective product decreases, and a manufacture costs a little.

As the parts are module-compacted in one structure, an assembling and disassembling process is easy, and assembling time and cost decrease, and productivity is enhanced.

An input of a foreign substance can be prevented by surrounding a coil part of a torsion spring with a cover plate, so an excellent sliding work can be maintained even for a long time use. An operation reliability of a mobile phone can be significantly enhanced.

A guide rail, a slide member and an elastic assembly are accommodated in a space formed in either a fixing plate or a moving plate, so the fixing plate or moving plate can be accommodated while compensating the space as much as a thickness of each part.

### BRIEF DESCRIPTION OF THE DRAWINGS

The present invention will become better understood with reference to the accompanying drawings which are given only by way of illustration and thus are not limitative of the present invention, wherein;
Figure 1 is a disassembled perspective view illustrating a mobile phone to which a slide hinge module for a mobile phone is applied according to an embodiment of the present invention;
Figure 2 is a disassembled perspective view illustrating a guide rail and a slide member according to an embodiment of the present invention;
Figure 3 is a schematic view illustrating a state that a slide hinge module for a mobile phone is assembled according to an embodiment of the present invention;
Figure 4 is a cross sectional view taken along line A-A of Figure 3;
Figure 5 is a disassembled perspective view illustrating an elastic assembly according to an embodiment of the present invention; and
Figure 6 is a view of an operation state of a slide hinge module for a mobile phone according to an embodiment of the present invention.

### MODES FOR CARRYING OUT THE INVENTION

The preferred embodiments of a slide hinge module for a mobile phone according to the present invention will be described with reference to the accompanying drawings. The thickness of the lines drawn in the drawings and the sizes of each element do not match with the actual sizes, which are shown for a simplification of description.

The terms to be described later are defined based on the functions in the present invention. They might change depending on an intention or behavior of a user or an operator. So the definitions of the terms shall be settled based on the contents of the present specification and claims.

### [Embodiments]

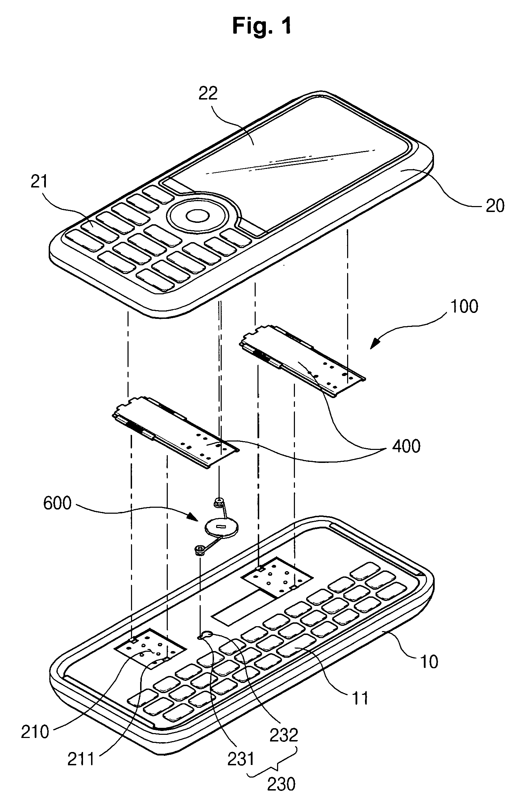

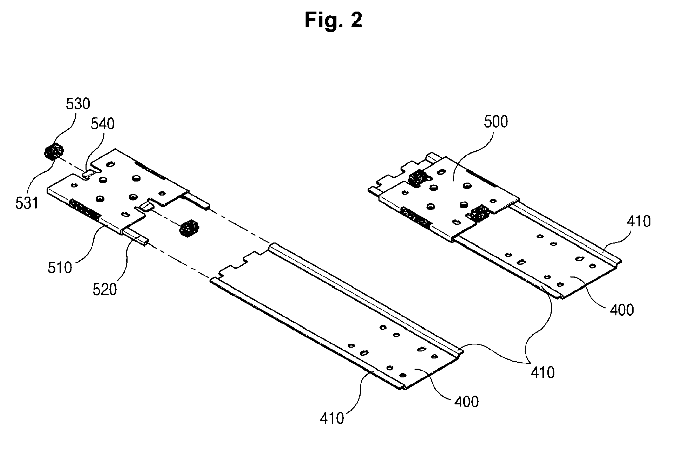

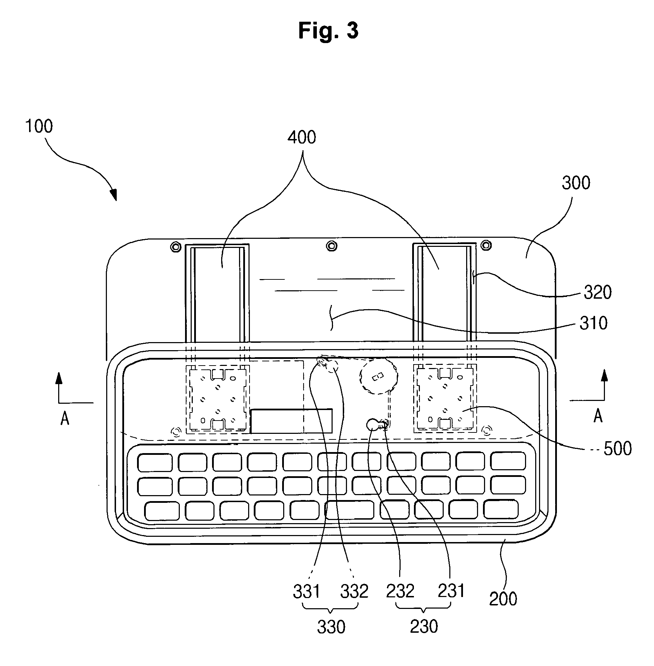

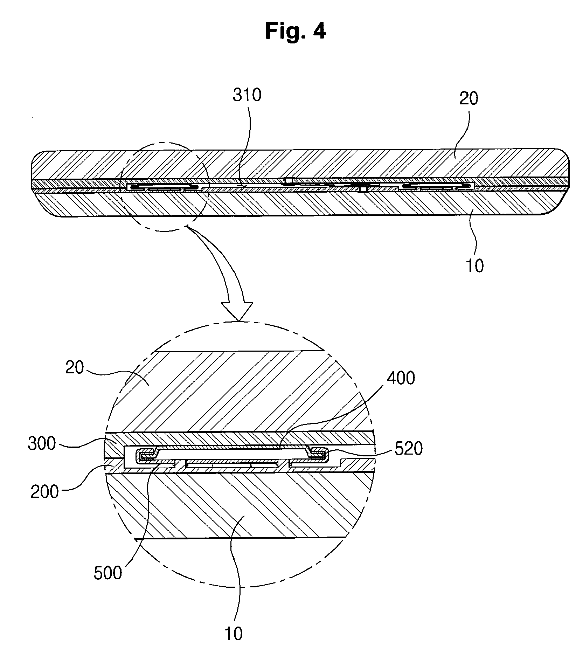

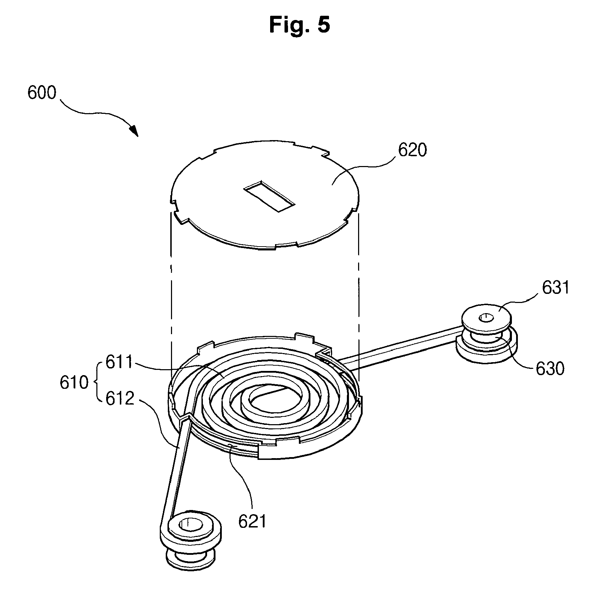

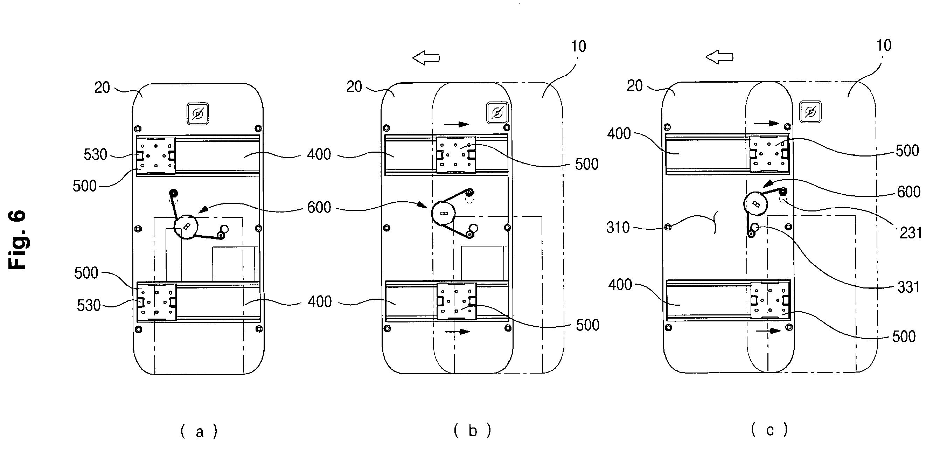

Figure 1 is a disassembled perspective view illustrating a mobile phone to which a slide hinge module for a mobile phone is applied according to an embodiment of the present invention. Figure 2 is a disassembled perspective view illustrating a guide rail and a slide member according to an embodiment of the present invention. Figure 3 is a schematic view illustrating a state that a slide hinge module for a mobile phone is assembled according to an embodiment of the present invention. Figure 4 is a cross sectional view taken along line A-A of Figure 3. Figure 5 is a disassembled perspective view illustrating an elastic assembly according to an embodiment of the present invention. Figure 6 is a view of an operation state of a slide hinge module for a mobile phone according to an embodiment of the present invention.

As shown in Figures 1 through 4, the slide hinge module 100 for a mobile phone according to the present invention is basically configured to open or close a QWERTY keypad 11 engaged in a mobile phone body 10 by horizontally reciprocating a cover 20 with respect to the mobile phone body 10, with a keypad 21 and a display part 22 being engaged in the cover 20.

The slide hinge module 100 according to an embodiment of the present invention comprises a fixing plate 200, a moving plate 300 and an elastic assembly 600. As shown in Figures 3 and 4, the fixing plate 200 is fixed in one front side of the body 10 having the QWERTY keypad 11, and the moving plate 300 is fixed in one rear side of the cover 20 having the keypad 21 and the display part 22.

The elastic assembly 600 is installed between the fixing plate 200 and the moving plate 300 and provides an elastic force by means of which the moving plate 300 can semi-automatically slide with respect to the fixing plate 200. A concave part 310 is formed in a center portion of a back side of the moving plate 300, namely, between a pair of guide rails 400, and the elastic assembly 600 is accommodated in the concave part 310.

The thickness of the elastic assembly 600 is accommodated in the concave part 310 of the moving plate 300, so the mobile phone can be slimmed.

A pair of guide rail accommodation grooves 320 is horizontally and longitudinally formed in the back side of the moving plate 300 in upper and lower portions. The guide rail 400 is accommodated in the guide rail accommodation grooves 320, respectively.

The guide rail 400 might be accommodated in the guide rail accommodation groove 320 of the moving plate 300 using an additional element or might be disposed in the guide rail accommodation groove 320 integrally with the moving plate 300.

A pair of guide member accommodation grooves 210 is formed in one side of a front side of the fixing plate 200 in upper and lower sides, respectively. The slide member 500 is accommodated in the slide member accommodation groove 210.

The thicknesses of the guide rail 400 and the slide member 500 are substantially absorbed by means of the guide rail accommodation groove 320 of the moving plate 300 and the slide member accommodation groove 210 of the fixing plate 200, which leads to a slim structure of the mobile phone.

The guide rail 400 and the slide member 500 are installed at both sides of the mobile phone in longitudinal directions in one pair for stably supporting the same. So the cover 20 can be prevented from distortions and damages when cover 20 slides in a horizontal direction, namely, in a widthwise direction with respect to the body 10.

As shown in Figure 2, the rail part 410, which is outwardly bent in an angle shape, is formed in both sides of the guide rail 400. An engaging part 510, which is inwardly bent in a channel shape, is formed in both sides of the slide member 500. Since the engaging part 510 of the slide member 500 is engaged corresponding to the rail part 410 of the guide rail 400, the slide member 500 can slide along the guide rail 400.

It is preferred that a lubricant member 520 made of a synthetic resin material is inserted into an inner side of the engaging part 510. The lubricant member 520 is capable of preventing a noise and abrasion which occurs due to a contact between the guide rail 400 and the slide member 500.

A stopper 530 is protruded from left and right ends of the slide member 500, respectively. The stopper 530 operates to limit an operation distance of the slide member 500 which slides along the guide rail 400. When the slide member 500 has moved up to the end of the guide rail 400, the stopper 530 contacts with a side wall of the guide rail accommodation groove 320, by means of which the slide member 500 no longer moves.

An insertion part 540 having a certain width is cut and formed in left and right sides of the slide member 500. The stopper 530 is preferably inserted into the insertion part 540. An insertion groove 531 is formed in one side of the stopper 530 and is engaged to the insertion part 540.

It is preferred that the stopper 530 is made of a synthetic resin material for preventing noises when the stopper 530 contacts with a side wall of the guide rail accommodation groove 320, and it is preferred that a stopper accommodation groove 211 is formed in one side of the fixing plate 200, namely, in the slide member accommodation groove 210 for accommodating the stopper 530 as much as the thickness of the same, so that the thickness of the mobile phone does not increase due to the thickness of the stopper 530.

A concave part 310 is formed in a center portion of the moving plate 300, namely, between a pair of the guide rails 400. As shown in Figures 3 and 4, a certain space is not needed in order to install the elastic assembly 600 as the elastic assembly 600 rotates while being accommodated in the concave part 310. The mobile phone can be made as slim as the thickness of the elastic assembly 600 accommodated in the concave part 310.

The elastic assembly 600 is provided in order to allow the moving plate 300 to semi-automatically slide in either a rightward or leftward direction without further force once the moving plate 300 moves as the user applies an external force thereto, which maximizes a user's convenience.

Figure 5 is a view illustrating an example of the elastic assembly.

As shown in Figure 5, the elastic assembly 600 comprises a torsion spring 610, a cover plate 620, and a pair of hooks 630.

The torsion spring 610 comprises a circular coil part 611, and a pair of leg parts 612 which are extended from both ends of the coil part 611. Upper and lower sides of the coil part 611 are covered by means of the cover plate 620 for thereby preventing the input of foreign substances. A groove 621 is formed at both sides of the cover plate 620 for allowing a pair of the leg parts 612 to be exposed to the outside of the cover plate 620.

The hook 630 is engaged to one end of each leg part 612. The hook 630 is formed in a circular column shape with an escape prevention part, whose width being expanded, being formed at its upper and lower ends. So it is possible to prevent the leg part 612 from being escaped in the upper and lower directions of the hook 630 when the leg part 612 of the torsion spring 610 is engaged by means of the hook 630 in a ring shape.

The escape prevention part 631 of the hook 630 allows the hook 630 to be engaged to the fixing plate 200 or the moving plate 300.

One of the hooks 630 is engaged to one side of the fixing plate 200, and the other one of the same is engaged to one side of the moving plate 300. The elastic assembly 600 supplies an elastic force between the fixing plate 200 and the moving plate 300. Hook engaging holes 230 and 330 are formed in the fixing plate 200 and the moving plate 300, respectively, so that each hook 630 can be engaged thereto.

The escape prevention part 631 of the hook 630 is inserted into and engaged to the hook engaging holes 230 and 330, respectively.

The hook engaging holes 230 and 330 are formed of fixing holes 231 and 331 and insertion holes 232 and 332, respectively.

The escape prevention part 631 of the hook 630 is inserted into the insertion holes 232 and 332 when the elastic assembly 600 is installed. The fixing holes 231 and 331 have diameters smaller than the insertion holes 232 and 332 and communicate with the insertion holes 232 and 332. The escape prevention part 631 of the hook 630 is caught by means of the outer surfaces of the fixing holes 231 and 331 after the hook 630 inserted through the insertion holes 232 and 332 is moved to the fixing holes 231 and 331, respectively, so the installation of the elastic assembly 600 is finished.

The fixing holes 232 and 331 are tapered with their widths being decreased toward the outer sides of the insertion holes 232 and 332. It is preferred the hook 630 is not escaped from the fixing holes 231 and 331 after it is inserted into the fixing holes 231 and 331.

The operation of the slide hinge module 100 for a mobile phone according to an embodiment of the present invention will be described with reference to Figure 6.

Figures 6A through 6C are views of the use states of a slide hinge module for a mobile phone according to an embodiment of the present invention. Figure 6A is a view of a state that a body is fully covered by means of a cover, and Figure 6B is a view of a state that part of a keypad of a body is exposed while a cover is moving toward one side of the body, and Figure 6C is a view of a state that the movement of a cover toward one side of the body is finished. Figures 6A through 6C are taken when viewing from a backside of the mobile phone.

In a state before a slide hinge module 100 for a mobile phone is used, namely, a state that a body 10 is fully covered by means of a cover 20, the both ends of the torsion spring 610 are fixed in the fixing plate 200 and the moving plate 300, respectively. As shown in Figure 6A, the leg parts 612 are accommodated in the concave part 310 while being widened in maximum.

At this time, when a user pushes the cover 20 toward the right side of the body 10(toward the left side in Figure 6), the moving plate 300 slides toward the right side(toward the left side in Figure 6) with respect to the fixing plate 200, and leg parts 612 of the torsion spring 610 rotate while being narrowed.

When the user keeps pushing the cover 20, and the hooks 630 of the torsion spring 610 are positioned on the vertical line as shown in Figure 6B, the compression force applied to the torsion spring 610 is maximized, and in this state when the cover 20 is further pushed, the leg parts 612 are quickly widened by means of an elastic recovery force of the torsion spring 610, and the torsion spring 610 rotates, and the cover 20 is fast pushed toward the right side(toward the left side in Figure 6).

When the cover 20 is closed toward the body 10, the above-described procedure is performed in a reverse sequence. The black arrow indication of Figure 6 represents a moving direction of the slide member 500, and the white arrow indication represents a moving direction of the cover 20 and the moving plate 300, respectively.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In a slide hinge module for a mobile phone which reciprocates a cover with a display part in a horizontal direction with respect to a body, a slide hinge module for a mobile phone, comprising:
a fixing plate which is fixed in the body;
a moving plate which is fixed in the cover;
a guide rail which is provided in one side of the moving plate in a horizontal direction;
a slide member which is engaged while corresponding to the guide rail and reciprocates along the guide rail and is fixed in one side of the fixing plate; and
an elastic assembly which is installed in one side of the guide rail and slides the moving plate with respect to the fixing plate, whereby a concave part is formed in one side of the guide rail, and said elastic assembly is installed in the concave part.

2. The module of claim 1, wherein said slide member is engaged at both upper and lower sides of the fixing plate, respectively, while operating as one pair, and said guide rail is engaged at both upper and lower sides of the moving plate, respectively, while operating as one pair.

3. The module of claim 2, wherein said elastic assembly is installed between a pair of the guide rails.

4. The module of one among claims 1 through 3, wherein a slide member accommodation groove is formed in one side of the fixing plate for accommodating the slide member.

5. The module of one among claims 1 through 3, wherein a stopper is protruded from both left and right sides of the slide member, and a stopper accommodation groove is formed in one side of the fixing plate for accommodating the stopper.

6. The module of claim 5, wherein said stopper is equipped with an insertion groove formed in its one side, and an insertion part is cut and formed in both left and right sides of the slide member and is correspondingly engaged to the insertion groove, and the stopper is inserted into and engaged to the insertion part.

7. The module of one among claims 1 through 3, wherein said elastic assembly includes a torsion spring formed of a coil part and a pair of leg parts extended from both ends of the coil part, a cover part which covers both upper and lower parts of the coil part, and a pair of hooks which are fixed in the ends of the leg parts, respectively, and one of a pair of the hooks is engaged to one side of the fixing plate, and the other one of the same is engaged to one side of the moving plate.

8. The module of claim 7, wherein a hook engaging hole is formed in the fixing plate and the moving plate, respectively, so a pair of hooks are correspondingly engaged to the same, and said hook engaging hole is formed of a fixing hole in which the hook is inserted and engaged, and an insertion hole formed in one side of the fixing hole for guiding the hook into the fixing hole.

9. The module of one among claims 1 through 3, wherein the both sides of the slide member are inwardly bent in channel shapes for thereby forming an engaging part, and the both sides of the guide rail are outwardly bent in angle shapes for thereby forming a rail part, and said engaging part is correspondingly engaged to the rail part.
